# EUROPÄISCHE PATENTSCHRIFT

(11) **EP 3 160 807 B1**
(45) Veröffentlichungstag und Bekanntmachung des Hinweises auf die Patenterteilung: **11.07.2018**
(21) Anmeldenummer: 15724221.5
(22) Anmeldetag: 18.05.2015
(51) Int. Cl.: B60T 8/40

(54) **BREMSANLAGE FÜR EIN KRAFTFAHRZEUG**
BRAKING SYSTEM FOR A MOTOR VEHICLE
SYSTÈME DE FREINAGE POUR VÉHICULE À MOTEUR

(30) Priorität: 30.06.2014 DE 102014212608; 04.05.2015 DE 102015208148
(43) Veröffentlichungstag der Anmeldung: 03.05.2017
(73) Patentinhaber: Continental Teves AG & Co. OHG, 60488 Frankfurt (DE)
(72) Erfinder: BESIER, Marco, 65307 Bad Schwalbach (DE); DRUMM, Stefan, 55291 Saulheim (DE)
(86) Internationale Anmeldenummer: PCT/EP2015/060832
(87) Internationale Veröffentlichungsnummer: WO 2016/000865

(56) Entgegenhaltungen:
- WO-A1-2012/028521
- WO-A2-2012/143175
- DE-A1-102008 060 029
- DE-A1-102011 084 206
- DE-A1-102012 205 860

## Beschreibung

Die Erfindung betrifft eine Bremsanlage für ein Kraftfahrzeug gemäß dem Oberbegriff von Anspruch 1.

In der Kraftfahrzeugtechnik finden "Brake-by-wire"-Bremsanlagen eine immer größere Verbreitung. Solche Bremsanlagen umfassen oftmals neben einem durch den Fahrzeugführer betätigbaren Hauptbremszylinder eine elektrisch steuerbare Druckbereitstellungseinrichtung, mittels welcher in der Betriebsart "Brake-by-wire" der hydraulische Druck zur Betätigung der Radbremsen aufgebaut wird. Das Vorhandensein eines "Brake-by-wire"-Betriebsmodus der Bremsanlage ist die Voraussetzung für ein automatisiertes Fahren, bei dem eine elektronische Autopilot-Funktion das Fahrzeug entweder vollständig selbständig oder in Kooperation mit dem Fahrer lenkt, beschleunigt und bremst.

Um die Sicherheitsanforderungen für ein automatisiertes Fahren, insbesondere die Durchführung einer Bremsung ohne Betätigung des Bremspedals durch den Fahrer, auch im Falle eines Ausfalls der elektrisch steuerbaren Druckbereitstellungseinrichtung, zu erfüllen, ist eine zweite, unabhängige Einrichtung zur elektrisch steuerbaren Bereitstellung von Bremsdruck notwendig.

Aus der DE 10 2012 205 860 A1 ist eine Bremsanlage für Kraftfahrzeuge bekannt mit einer ersten Hydraulikeinheit mit einem bremspedalbetätigbaren Hauptbremszylinder und einer ersten elektrisch steuerbaren Druckquelle und mit einer zweiten Hydraulikeinheit mit einem Motor-Pumpen-Aggregat, Niederdruckspeichern und einer Radbremsdruck-Modulationseinheit mit einem Einlass- und einem Auslassventil je Radbremse (sogenanntes ESC-Hydraulikmodul (ESC: Electronic Stability Control), mit geschlossenem ABS (ABS: Anti-Blockier-System)). Es sind zwei elektronische Steuer- und Regeleinheiten vorgesehen, wobei die erste Steuer- und Regeleinheit zur Ansteuerung der ersten Hydraulikeinheit und die zweite Steuer- und Regeleinheit zur Ansteuerung der zweiten Hydraulikeinheit dient. Über die Versorgung der Komponenten mit elektrischer Energie werden keine Ausführungen gemacht.

Aus der DE 10 2011 084 206 A1 ist eine Bremsanlage für Kraftfahrzeuge bekannt mit einem Hauptbremszylinder, welcher durch einen elektrohydraulischen Aktuator elektrisch betätigbar ist, einem Motor-Pumpen-Aggregat und einer Radbremsdruck-Modulationseinheit mit einem Einlass- und einem Auslassventil je Radbremse. Es sind zwei elektronische Steuer- und Regeleinheiten vorgesehen, wobei die erste Steuer- und Regeleinheit zur Ansteuerung des Motor-Pumpen-Aggregats und der Radbremsdruck-Modulationseinheit und die zweite Steuer- und Regeleinheit zur Ansteuerung des elektrohydraulischen Aktuators zur Betätigung des Hauptbremszylinders dient. Weiterhin sind zwei separate Energieversorgungen vorgesehen, wobei die erste Energieversorgung die erste Steuer- und Regeleinheit und die zweite Energieversorgung die zweite Steuer- und Regeleinheit mit elektrischer Energie versorgt. Bei Ausfall der ersten Energieversorgung ist nur noch ein einheitlicher Bremsdruckaufbau bzw. -abbau an allen Radbremsen mittels des elektrohydraulischen Aktuators möglich. Das Einstellen radindividueller Bremsdrücke, insbesondere eine Antiblockier-Regelung oder eine Fahrdynamikregelung (ESC) oder eine andere stabilisierende Assistenzfunktion der Bremsanlage, ist in der bekannten Bremsanlage in diesem Falle nicht möglich.

Es ist daher Aufgabe der vorliegenden Erfindung, eine Bremsanlage für ein Kraftfahrzeug bereitzustellen, welche die Sicherheitsanforderungen des automatisierten oder autonomen Fahrens erfüllt. Dabei soll insbesondere die Verfügbarkeit schlupfgeregelter und fahrzeugstabilisierender Bremsungen erhöht werden.

Diese Aufgabe wird erfindungsgemäß durch eine Bremsanlage gemäß Anspruch 1 gelöst.

Der Erfindung liegt der Gedanke zugrunde in einer Bremsanlage mit einer ersten elektrisch steuerbaren Druckquelle zur Betätigung der Radbremsen, einer elektrisch steuerbaren Druckmodulationseinrichtung mit einem Einlass- und Auslassventil je Radbremse zum Einstellen radindividueller Bremsdrücke und einer zweiten elektrisch steuerbaren Druckquelle zur Betätigung der Radbremsen, welche ein Motor-Pumpen-Aggregat mit einer zumindest zweikreisigen hydraulischen Pumpe und zumindest einen Niederdruckspeicher umfasst, welcher mit einem Ausgangsanschluss zumindest eines Auslassventils verbunden ist, eine erste elektrische Energieversorgungseinheit und eine zweite elektrische Energieversorgungseinheit, welche von der ersten elektrischen Energieversorgungseinheit unabhängig ist, vorzusehen. Dabei ist die erste Druckquelle von der ersten Energieversorgungseinheit mit elektrischer Energie versorgbar, die zweite Druckquelle, d.h. zumindest das Motor-Pumpen-Aggregat, von der zweiten Energieversorgungseinheit mit elektrischer Energie versorgbar und die Druckmodulationseinrichtung von der ersten Energieversorgungseinheit und der zweiten Energieversorgungseinheit mit elektrischer Energie versorgbar.

Ein Vorteil der Erfindung ist es, dass zumindest teilweise auf das an sich bekannte und bewährte Hydrauliklayout eines geschlossenen ABS mit Motor-Pumpen-Aggregat und Niederdruckspeicher zurückgegriffen wird und dennoch die Sicherheitsanforderungen des automatisierten Fahrens erfüllt werden. Derartige Aggregate sind an sich seit langer Zeit bekannt und können hohe Drücke erzeugen und in sehr kompakter Baugröße realisiert werden.

Weiterhin besitzt die erfindungsgemäße Bremsanlage den Vorteil einer höheren Verfügbarkeit der Grundbremsfunktion, der Schlupfregelung und der Fahrzeugstabilisierung. Auch ist es bei der erfindungsgemäßen Bremsanlage einfach möglich, den Datenpfad von einem Autopilot-Steuergerät zur Bremsanlage ausfallsicher auszuführen.

Der Niederdruckspeicher dient zur Aufnahme des während einer ABS-Regelung aus der oder den zugeordneten Radbremsen abgelassenen Druckmittels (sogenanntes geschlossenes ABS).

Bevorzugt ist ein Sauganschluss der Pumpe über ein Rückschlagventil, das in Richtung des Sauganschlusses öffnet, mit dem Niederdruckspeicher verbunden, so dass Druckmittel aus dem Niederdruckspeicher angesaugt werden kann (Rückförderprinzip).

Bevorzugt umfasst die zweite Druckquelle zumindest einen Niederdruckspeicher, welcher mit den Ausgangsanschlüssen der Auslassventile eines Bremskreises verbunden ist. D.h. es ist zumindest einem der Bremskreise der Bremsanlage ein geschlossenes Antiblockier-System bzw. ein ABS mit Rückförderung zugeordnet.

Bevorzugt umfasst die zweite Druckquelle einen Niederdruckspeicher je Bremskreis, welcher mit den Ausgangsanschlüssen der Auslassventile des Bremskreises verbunden ist.

Bevorzugt ist die erste Druckquelle ausschließlich von der ersten Energieversorgungseinheit mit elektrischer Energie versorgbar und die zweite Druckquelle ausschließlich von der zweiten Energieversorgungseinheit mit elektrischer Energie versorgbar. Dies bietet gegenüber einer Bremsanlage, bei welcher zumindest eine der beiden Druckquellen von der ersten und der zweiten Energieversorgungseinheit versorgt werden kann, eine geringere Anzahl von Versorgungsleitungen von den Energieversorgungseinheiten zu den Druckquellen.

Gemäß einer Weiterbildung der Erfindung umfasst die Bremsanlage eine der ersten Druckquelle zugeordnete erste elektronische Steuer- und Regeleinheit zur Ansteuerung der ersten Druckquelle, eine der zweiten Druckquelle zugeordnete zweite elektronische Steuer- und Regeleinheit zur Ansteuerung der zweiten Druckquelle und eine der Druckmodulationseinrichtung zugeordnete dritte elektronische Steuer- und Regeleinheit zur Ansteuerung der Druckmodulationseinrichtung. Durch die separat ausgeführte, dritte Steuer- und Regeleinheit für die Druckmodulationseinrichtung kann erreicht werden, dass die Verfügbarkeit erhöht wird.

Die Druckmodulationseinrichtung ist bevorzugt als eine eigenständige hydraulische Einheit ausgeführt. Die Druckmodulationseinrichtung und die dritte elektronische Steuer- und Regeleinheit sind besonders bevorzugt als eine elektrohydraulische Steuereinheit ausgeführt.

Die zweite Druckquelle mit Motor-Pumpen-Aggregat und Niederdruckspeicher bzw. Niederdruckspeichern, und ggf. Ventilen, ist bevorzugt als eine eigenständige hydraulische Einheit ausgeführt. Diese hydraulische Einheit und die zweite elektronische Steuer- und Regeleinheit sind besonders bevorzugt als eine elektrohydraulische Steuereinheit ausgeführt.

Gemäß einer bevorzugten Ausführungsform der erfindungsgemäßen Bremsanlage ist die erste elektronische Steuer- und Regeleinheit von der ersten Energieversorgungseinheit mit elektrischer Energie versorgbar, die zweite elektronische Steuer- und Regeleinheit von der zweiten Energieversorgungseinheit mit elektrischer Energie versorgbar und die dritte elektronische Steuer- und Regeleinheit von der ersten Energieversorgungseinheit und von der zweiten Energieversorgungseinheit mit elektrischer Energie versorgbar. Dies bietet den Vorteil, dass nach einem Ausfall der ersten oder der zweiten Steuer- und Regeleinheiten immer noch eine der Druckquellen sowie die Druckmodulationseinrichtung mit elektrischer Energie versorgt und angesteuert werden können, um so eine sichere Bremsung durchführen zu können.

Die erste und die zweite Druckquelle und die Druckmodulationseinrichtung werden bevorzugt über die ihr zugeordnete elektronische Steuer- und Regeleinheit mit elektrischer Energie versorgt.

Gemäß einer Weiterbildung der Erfindung umfasst die Bremsanlage eine elektronische Einrichtung zum Anschluss der dritten elektronischen Steuer- und Regeleinheit an die erste und die zweite Energieversorgungseinheit. Dies ist derart ausgeführt, dass ein Fehler in einer der Energieversorgungseinheit nicht zu einem Ausfall der Energieversorgung der dritten elektronischen Steuer- und Regeleinheit führt. Besonders bevorzugt umfasst die Einrichtung ein DC-DC-Wandler-Modul mit zwei Eingangs- und einem Ausgangsanschluss.

Um Antiblockier-Regelungen ausführen zu können, umfasst die Bremsanlage bevorzugt Raddrehzahlsensoren oder ist mit solchen verbunden, wobei die Signale der Raddrehzahlsensoren der dritten Steuer- und Regeleinheit zugeführt werden. Die Verarbeitung der Signale wird besonders bevorzugt in der dritten Steuer- und Regeleinheit durchgeführt, so dass die für eine Ansteuerung der Druckmodulationseinrichtung bei einer radindividuellen Bremsdruckregelung benötigten Daten auch bei Ausfall der ersten oder zweiten Steuer- und Regeleinheit verfügbar sind.

Die Bremsanlage umfasst zusätzlich bevorzugt eine Sensoreinrichtung zur Erfassung von Fahrdynamikgrößen oder ist mit einer solchen verbunden, wobei die Signale der Sensoreinrichtung der der Druckmodulationseinrichtung zugeordneten dritten Steuer- und Regeleinheit zugeführt werden. Die Verarbeitung der Signale wird besonders bevorzugt in der dritten Steuer- und Regeleinheit durchgeführt. Hierdurch ist eine fahrdynamische, radindividuelle Bremsdruckregelung auch bei Ausfall der ersten oder zweiten Steuer- und Regeleinheit möglich.

Bevorzugt umfasst die Sensoreinrichtung zumindest einen Sensor zur Erfassung der Gierrate des Kraftfahrzeugs, zumindest einen Sensor zur Erfassung der Querbeschleunigung des Kraftfahrzeugs und/oder einen Sensor zur Erfassung der Längsbeschleunigung des Kraftfahrzeugs.

Die erste, die zweite und die dritte Steuer- und Regeleinheit sind bevorzugt über Datenbusse miteinander verbunden.

Die zweite Druckquelle umfasst bevorzugt elektrisch betätigbare Ventile. Vorteilhafterweise werden diese Ventile von der zweiten elektronischen Steuer- und Regeleinheit angesteuert wie das Motor-Pumpen-Aggregat.

Gemäß einer bevorzugten Ausführungsform der Bremsanlage werden die Ventile der zweiten Druckquelle von der dritten elektronischen Steuer- und Regeleinheit angesteuert , während das Motor-Pumpen-Aggregat der zweiten Druckquelle von der zweiten elektronischen Steuer- und Regeleinheit angesteuert wird.

Bevorzugt umfasst die erste elektrisch steuerbare Druckquelle einen Hauptbremszylinder mit einem, vorteilhafterweise diesem vorgeschalteten, sowohl über ein Bremspedal mechanisch als auch "by-wire" elektrisch steuerbaren Bremskraftverstärker, wobei der Hauptbremszylinder zwei Druckräume aufweist (d.h. der Hauptbremszylinder ist zweikreisig ausgeführt) und jedem der Druckräume ein Bremskreis mit Radbremsen zugeordnet ist. Besonders bevorzugt ist der elektrisch steuerbare Bremskraftverstärker dem Hauptbremszylinder vorgeschaltet. Derartige Hauptbremszylinder mit vorgeschaltem, elektrisch steuerbarem Bremskraftverstärker sind bereits erprobte Komponenten einer Bremsanlage.

Gemäß einer bevorzugten Ausführungsform der Bremsanlage ist je Bremskreis ein Sauganschluss der Pumpe mit dem zugeordneten Druckraum des Hauptbremszylinders trennbar verbunden. Besonders bevorzugt ist in der Verbindung ein stromlos geschlossenes Ventil angeordnet. Weiterhin ist ein Druckanschluss der Pumpe mit den Einlassventilen der Radbremsen des Bremskreises verbunden, vorteilhafterweise aufgrund des geringeren Strömungswiderstandes direkt verbunden.

Der bremspedal- oder "by-wire"-steuerbare Bremskraftverstärker umfasst bevorzugt einen elektrisch steuerbaren elektromechanischen Aktuator mit einem Elektromotor und einem Translations-Rotations-Getriebe, welcher einen Kolben des Hauptbremszylinders betätigt.

Bevorzugt ist die zweite Druckquelle hydraulisch zwischen der ersten Druckquelle und der Druckmodulationseinrichtung angeordnet.

Bevorzugt umfasst die zweite Druckquelle je Bremskreis ein erstes, stromlos offenes Ventil, ein zweites, stromlos geschlossenes Ventil und einen Niederdruckspeicher, wobei die Auslassventile der Radbremsen des Bremskreises mit dem Niederdruckspeicher verbunden sind. Besonders bevorzugt stellt die zweite Druckquelle zusammen mit der Druckmodulationseinrichtung die Hydraulik einer an sich bekannten, konventionellen ESC-Einheit dar. Bei bekannten Bremsanlagen sind die Ventile der ESC-Steuereinheit (Einlass- und Auslassventile, Trenn- und Umschaltventile) in einer einzigen Hydraulikeinheit angeordnet und werden durch eine einzige elektronische Steuer- und Regeleinheit angesteuert. Durch die Ansteuerung der Ventile der ESC-Steuereinheit durch zwei elektronische Steuer- und Regeleinheit (einerseits Einlass- und Auslassventile angesteuert durch die dritte elektronische Steuer- und Regeleinheit, andererseits Trenn- und Umschaltventile angesteuert durch die zweite elektronische Steuer- und Regeleinheit) ergibt sich eine große Erhöhung der Verfügbarkeit der Bremssystemfunktionen.

Alternativ ist es bevorzugt, dass die zweite Druckquelle für nur einen der Bremskreise ein erstes, stromlos offenes Ventil, ein zweites, stromlos geschlossenes Ventil und einen Niederdruckspeicher umfasst, wobei die Auslassventile der Radbremsen dieses Bremskreises mit dem Niederdruckspeicher verbunden sind. Für den anderen Bremskreis umfasst die zweite Druckquelle keinen Niederdruckspeicher. Die Auslassventile der Radbremsen des anderen Bremskreises sind mit einem unter Atmosphärendruck stehenden Druckmittelvorratsbehälter verbunden. Der Druckmittelvorratsbehälter ist vorteilhafterweise dem Hauptbremszylinder zugeordnet. Besonders bevorzugt umfasst die zweite Druckquelle für den anderen Bremskreis ein erstes, stromlos offenes Ventil und ein zweites, stromlos offenes Ventil.

Weitere bevorzugte Ausführungsformen der Erfindung ergeben sich aus den Unteransprüchen und der nachfolgenden Beschreibung anhand von Figuren.

Es zeigen
- Fig. 1: ein erstes Ausführungsbeispiel einer erfindungsgemäßen Bremsanlage,
- Fig. 2: ein zweites Ausführungsbeispiel einer erfindungsgemäßen Bremsanlage, und
- Fig. 3: ein drittes Ausführungsbeispiel einer erfindungsgemäßen Bremsanlage

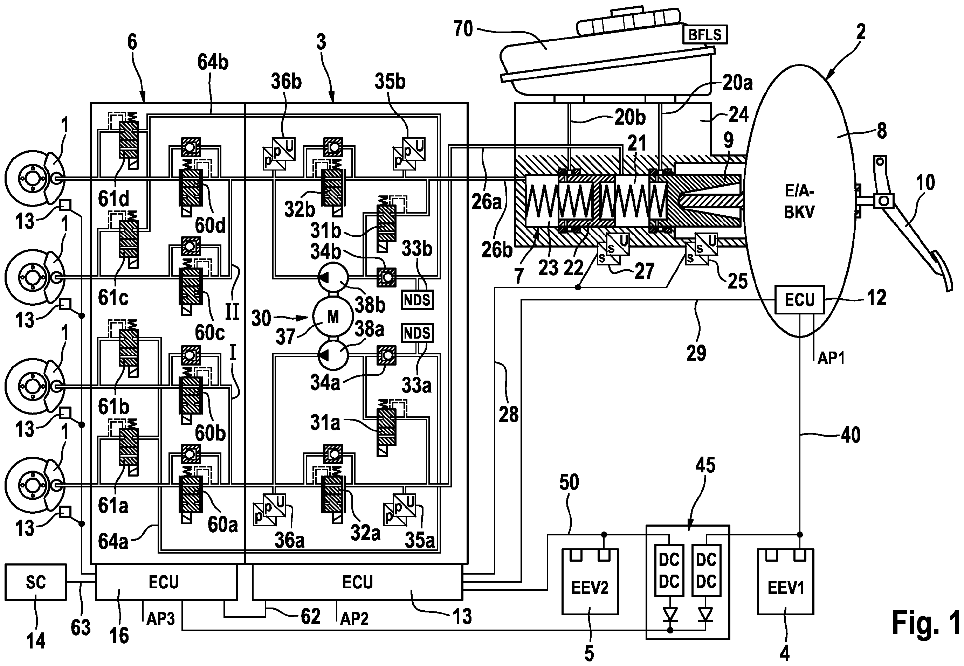

Die beispielsgemäße Bremsanlage gemäß Fig. 1 umfasst im Wesentlichen eine erste elektrisch steuerbare Druckquelle 2 zur Bereitstellung eines Bremsdrucks zur Betätigung der Radbremsen 1 eines nicht dargestellten Kraftfahrzeugs, eine zweite elektrisch steuerbare Druckquelle 3 zur Bereitstellung eines Bremsdrucks zur Betätigung der Radbremsen 1, eine elektrisch steuerbare Druckmodulationseinrichtung 6 zum Einstellen radindividueller Bremsdrücke für die Radbremsen 1, eine erste, eine zweite und eine dritte elektronische Steuer- und Regeleinheit (ECU: electronic control unit) 12, 13, 16 sowie eine erste elektrische Energieversorgungseinheit 4 und eine zweite elektrische Energieversorgungseinheit 5, welche von der ersten elektrischen Energieversorgungseinheit unabhängig ist.

Die erste elektronische Steuer- und Regeleinheit 12 ist der ersten Druckquelle 2 zugeordnet und dient zur Ansteuerung der ersten Druckquelle 2. Die zweite elektronische Steuer- und Regeleinheit 13 ist der zweiten Druckquelle 3 zugeordnete und dient zur Ansteuerung der zweiten Druckquelle 3 und die dritte elektronische Steuer- und Regeleinheit 16 ist der Druckmodulationseinrichtung 6 zugeordnet und dient zur Ansteuerung der Druckmodulationseinrichtung 6.

Die erste elektrisch steuerbare Druckquelle 2 umfasst einen zweikreisigen Hauptbremszylinder 7 mit zwei hintereinander angeordnete Kolben 9, 22, die zwei hydraulische Druckräume 21, 23 begrenzen. Die Druckräume 21, 23 stehen einerseits über in den Kolben 9, 22 ausgebildete radiale Bohrungen sowie entsprechende Druckausgleichsleitungen 20a, 20b mit einem unter Atmosphärendruck stehenden Druckmittelvorratsbehälter 70 in Verbindung, wobei diese durch eine Relativbewegung der Kolben 9, 22 im Gehäuse 24 absperrbar sind. Andererseits steht jeder der Druckräume 21 bzw. 23 mittels einer hydraulischen Verbindung 26a bzw. 26b mit der zweiten Druckquelle 3 in Verbindung. Die Druckräume 21, 23 nehmen nicht näher bezeichnete Rückstellfedern auf, die die Kolben 9, 22 bei unbetätigtem Hauptbremszylinder 7 in einer Ausgangslage positionieren.

Weiterhin umfasst die erste steuerbare Druckquelle 2 einen elektrisch steuerbaren Bremskraftverstärker 8, welcher dem Hauptbremszylinder 7 vorgeschaltet ist.

Eine Betätigung des Bremspedals 10 der Bremsanlage wird z.B. mittels eines nicht dargestellten Weg- oder Winkelsensors, z.B. in dem Bremskraftverstärker 8, erfasst und das Sensorsignal an die der ersten Druckquelle 2 zugeordnete erste elektronische Steuer- und Regeleinheit 12 weitergeleitet.

Zwischen der ersten und der zweiten Steuer- und Regeleinheit 12, 13 ist vorteilhafterweise eine Datenleitung, z.B. ein Datenbus, 29 vorhanden, über welche die erste Steuer- und Regeleinheit 12 der zweiten Steuer- und Regeleinheit 13 einen Zustandsstatus der ersten Druckquelle übermitteln kann. Z.B. kann die erste Steuer-und Regeleinheit 12 im Falle eines Fehlers der ersten Druckquelle 2 der zweiten Steuer- und Regeleinheit 13 eine Fehlermeldung übermitteln. Alternativ oder zusätzlich kann die erste Steuer-und Regeleinheit 12 der zweiten Steuer- und Regeleinheit 13 ein "in Ordnung"-Signal übermitteln, wenn die erste Druckquelle funktionsfähig ist. In beiden Fällen kann die zweite Steuer- und Regeleinheit 13 anhand des übermittelten Zustandsstatus der ersten Druckquelle erkennen, ob die zweite Druckquelle 3 zur Betätigung der Radbremsen angesteuert werden soll.

Durch die hydraulische Hintereinanderschaltung der beiden Druckquellen 2, 3, wobei der Druck der ersten Druckquelle bei stromloser zweiter Druckquelle (Grundzustand) durch die zweiter Druckquelle geführt wird, ist ein Aufbau der Drücke an der Druckmodulationseinrichtung 6 (sog. Modulatorvordrücke) selbst dann gewährleistet, wenn die erste Druckquelle, z.B. infolge eines Ausfalls der ersten elektrischen Energieversorgung, nicht betriebsbereit ist und die erste Steuer- und Regeleinheit 12 auch kein entsprechendes Fehlersignal sendet. Für diesen Fall sind zur unabhängigen Betätigung der Radbremsen und geeigneten Ansteuerung der zweiten Druckquelle 3 vorteilhafterweise zwei weitere, unabhängige Wegsensoren 25 und 27 vorgesehen, die z.B. eine Verschiebung der Kolben 9 und 22 erfassen, und deren Signale über eine Signal- oder Datenleitung 28 an die zweite elektronische Steuer- und Regeleinheit 13 übermittelt werden.

Druckmodulationseinrichtung 6 ist als eine eigenständige hydraulische Einheit ausgeführt und umfasst je Radbremse 1 ein Einlassventil 60a-60d und ein Auslassventil 61a-61d, die paarweise über Mittenanschlüsse hydraulisch zusammengeschaltet und an die Radbremse 1 angeschlossen sind. Die Eingangsanschlüsse der Einlassventile 60a-60d werden von der zweiten Druckquelle 3 mit einem Druck je Bremskreis I, II versorgt (Modulatorvordruck) . Den Einlassventilen 60a-60d ist jeweils ein nicht näher bezeichnetes, zur zweiten Druckquelle 3 hin öffnendes Rückschlagventil parallel geschaltet. Die Ausgangsanschlüsse der Auslassventile 61a, 61b; 61c, 61d sind je Bremskreis I; II über die zugeordnete Rücklaufleitung 64a, 64b mit einem Niederdruckspeicher 33a, 33b der zweiten Druckquelle 3 verbunden.

Die der Druckmodulationseinrichtung 6 zugeordnete dritte elektronische Steuer- und Regeleinheit 16 ist vorteilhafterweise mit der zweiten elektronische Steuer- und Regeleinheit 13 über eine Datenleitung, z.B. einen Datenbus, 62 verbunden. So kann die dritte Steuer- und Regeleinheit 16 von der zweiten Steuer- und Regeleinheit 13 einen zusätzlichen Druckaufbau anfordern (z.B. für ESC-Funktion).

Bevorzugt sind die Hydraulikeinheit 6 und die Elektronikeinheit 16 als eine elektrohydraulische Steuereinheit (HECU) ausgeführt.

Die zweite elektrisch steuerbare Druckquelle 3 ist beispielsgemäß als eine eigenständige hydraulische Einheit ausgeführt, die hydraulisch zwischen der ersten Druckquelle 2 und der Druckmodulationseinrichtung 6 angeordnet ist.

Bevorzugt sind die Hydraulikeinheit 3 und die Elektronikeinheit 13 als eine elektrohydraulische Steuereinheit (HECU) ausgeführt.

Druckquelle 3 umfasst beispielsgemäß im Wesentlichen eine elektrisch steuerbare Druckbereitstellungseinrichtung 30, welche als ein zweikreisiges Motor-Pumpen-Aggregat ausgeführt ist, den Niederdruckspeicher 33a, 33b je Bremskreis bzw. je hydraulischer Leitung 26a bzw. 26b und elektrisch betätigbare Ventile 31a, 32a, 31b, 32b.

Motor-Pumpen-Aggregat 30 umfasst zwei von einem Elektromotor 37 gemeinsam angetriebene Pumpen 38a, 38b. Das Motor-Pumpen-Aggregat ist vorzugsweise vom Typ einer vom Elektromotor über einen Exzenter angetriebenen Kolbenpumpe ausgebildet, einer Bauform, die in bekannten Bremssystemen als Rückförderpumpe bereits millionenfach eingesetzt wird. Diese kann besonders hohe Systemdrücke erzeugen und kann in sehr kompakter Baugröße realisiert werden.

Beispielsgemäß sind je Bremskreis I, II zwei elektrisch betätigbare Ventile 31a, 32a bzw. 31b, 32b sowie zwei Drucksensoren 35a, 36a bzw. 35b, 36b vorgesehen.

In den Verbindungen 26a, 26b zu der Druckmodulationseinrichtung 6 ist jeweils ein stromlos offen ausgeführtes, vorteilhafterweise analog ansteuerbares, Ventil 32a, 32b angeordnet, mittels welchem die hydraulische Verbindung zwischen dem Hauptbremszylinderdruckraum 21, 23 und der Druckmodulationseinrichtung 6 unterbrochen werden kann.

Dem Ventil 32a, 32b ist je ein zu der Druckmodulationseinrichtung 6 hin öffnendes, nicht näher bezeichnetes Rückschlagventil parallel geschaltet.

Der Druck vor und hinter dem Ventil 32a, 32b wird mittels der Drucksensoren 35a, 36a bzw. 35b, 36b gemessen.

Je Bremskreis ist der Sauganschluss der Pumpe 38a, 38b über ein Rückschlagventil 34a, 34b, das in Richtung des Sauganschluss öffnet, mit dem Niederdruckspeicher 33a, 33b verbunden, so dass Druckmittel aus dem Niederdruckspeicher 33a, 33b angesaugt werden kann.

Der jeweilige Druckanschluss der Pumpe 38a, 38b ist mit dem zugeordneten Eingangsanschluss der Druckmodulationseinrichtung 6 bzw. den Eingangsanschlüssen der zugeordneten Eingangsventile 60a, 60b, 60c, 60d verbunden.

Weiterhin ist der Sauganschluss der Pumpe 38a, 38b jeweils über eine hydraulische Verbindung mit dem Hauptbremszylinderdruckraumseitigen Bereich der Verbindung 26a, 26b verbunden, wobei in der hydraulischen Verbindung ein stromlos geschlossen ausgeführtes Ventil 31a, 31b vorgesehen ist.

Die Gesamthydraulik der Druckmodulationseinrichtung 6 und der Druckquelle 3 stellt beispielsgemäß die Hydraulik einer an sich bekannten, konventionellen ESC-Einheit (ESC: Electronic Stability Control) bzw. eines an sich bekannten, geschlossenen ABS dar.

Die erste Druckquelle 2 wird über eine Versorgungsleitung 40 von der ersten Energieversorgungseinheit 4 mit elektrischer Energie versorgt und die zweite Druckquelle 3 wird über eine Versorgungsleitung 50 von der zweiten Energieversorgungseinheit 5 mit elektrischer Energie versorgt.

Zur Versorgung der Druckmodulationseinrichtung 6 mit elektrischer Energie ist eine elektronische Einrichtung 45 vorgesehen, mit deren Hilfe die Druckmodulationseinrichtung 6 von der ersten Energieversorgungseinheit 4, von der zweiten Energieversorgungseinheit 5 oder von beiden Energieversorgungseinheiten versorgt werden kann. Hierbei kann es sich z.B. um eine schaltbare Strom- oder Spannungsversorgung handeln, so dass die Druckmodulationseinrichtung 6 wahlweise von der ersten Energieversorgungseinheit 4 oder der zweiten Energieversorgungseinheit 5 versorgt wird. Einrichtung 45 ist derart ausgeführt, dass ein Fehler in einer der Energieversorgungseinheit, z.B. 4, nicht einen durch die Einrichtung 45 mit verursachten Ausfall der anderen Energieversorgungeinheit, z.B. 5, zur Folge haben kann, so dass die Energieversorgung der dritten elektronischen Steuer-und Regeleinheit 16 vollständig ausfallen würde. Beispielsgemäß umfasst die Einrichtung 45 ein DC-DC-Wandler-Modul mit zwei Eingangs- und einem Ausgangsanschluss.

Um eine Antiblockier-Regelung ausführen zu können, umfasst die Bremsanlage beispielsgemäß je Rad des Kraftfahrzeugs einen Raddrehzahlsensor 13. Damit die Signale der Raddrehzahlsensoren 13 auch bei Ausfall einer der Energieversorgungseinheiten 4, 5 oder bei Ausfall einer der Steuer- und Regeleinheiten 12, 13 für eine Antiblockier-Regelung zur Verfügung stehen, werden die Signale der Raddrehzahlsensoren 13 der Steuer- und Regeleinheit 16 der Druckmodulationseinrichtung 6 zugeführt. Beispielsgemäß werden die Raddrehzahlsignale in der Steuer- und Regeleinheit 16 verarbeitet und ausgewertet. Die Raddrehzahlsensoren 13 werden vorteilhafterweise von der Steuer- und Regeleinheit 16 mit elektrischer Energie versorgt.

Um eine Fahrdynamik-Regelung oder stabilisierende Assistenzfunktion ausführen zu können, umfasst die Bremsanlage beispielsgemäß weiterhin eine Sensoreinrichtung 14 (SC: Sensor Cluster) zur Erfassung von Fahrdynamikgrößen, deren Signale über eine Signal- oder Datenleitung 63, aus denselben Gründen wie oben ausgeführt, der Steuer- und Regeleinheit 16 der Druckmodulationseinrichtung 6 zugeführt werden und bevorzugt auch dort verarbeitet und ausgewertet werden. Sensoreinrichtung 14 wird vorteilhafterweise von der Steuer- und Regeleinheit 16 mit elektrischer Energie versorgt.

Sensoreinrichtung 14 umfasst beispielsgemäß einen Sensor zur Erfassung der Gierrate des Kraftfahrzeugs und einen Sensor zur Erfassung der Querbeschleunigung des Kraftfahrzeugs. Vorteilhafterweise umfasst Sensoreinrichtung 14 auch einen Sensor zur Erfassung der Längsbeschleunigung des Kraftfahrzeugs. Eine vollständige Erfassung der inertialen Bewegungsdaten des Fahrzeugaufbaus wird bei Verwendung eines Sensormoduls erreicht, das seine Beschleunigungen und Drehraten in jeweils drei Raumrichtungen erfasst. Weiterhin umfasst die Sensoreinrichtung 14 bevorzugt einen Lenkwinkel- oder Lenkradwinkelsensor.

Jede der drei elektronischen Steuer- und Regeleinheit 12, 13 und 16 ist über eine, von den anderen unabhängige Datenbusverbindung AP1, AP2, AP3 mit einem Steuergerät bzw. einem Rechnerverbund mit Autopilot-Funktion verbunden. So ist für das autonome Fahren eine besonders sichere Dreifachredundanz möglich.

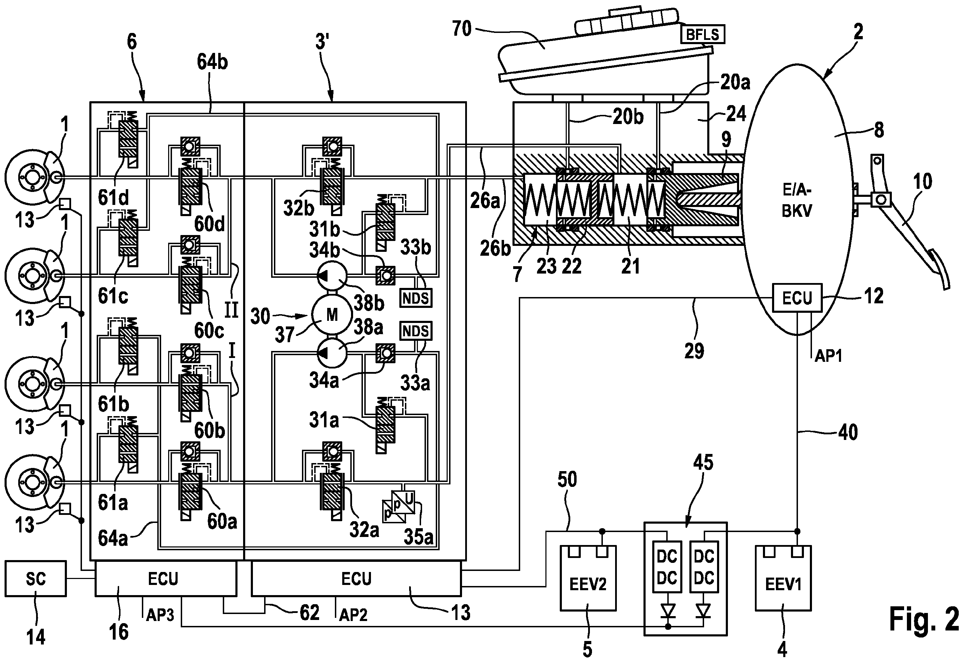

In Fig. 2 ist ein zweites Ausführungsbeispiel einer erfindungsgemäßen Bremsanlage schematisch dargestellt. Die Bremsanlage unterscheidet sich von dem in Fig. 1 dargestellten ersten Ausführungsbeispiel im Wesentlichen dadurch, dass in der zweiten Druckquelle 3' nur der Drucksensor 35a vorgesehen ist. Drucksensor 35a erfasst den Druck des ersten Hauptbremszylinderdruckraums 21 bzw. den Druck vor dem Ventil 32a. Die übrigen, oben gemachten Ausführungen zum ersten Ausführungsbeispiel gelten entsprechend für das zweite Ausführungsbeispiel.

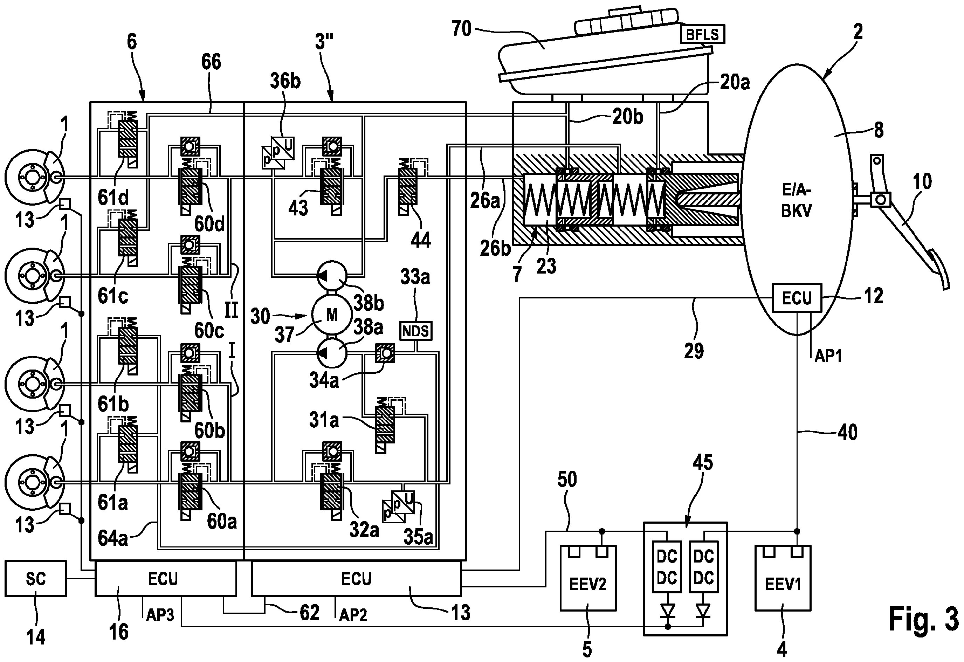

In Fig. 3 ist ein drittes Ausführungsbeispiel einer erfindungsgemäßen Bremsanlage schematisch dargestellt. Die Bremsanlage unterscheidet sich von dem zweiten Ausführungsbeispiel im Wesentlichen durch die Ausführung der zweiten Druckquelle 3". Auch Druckquelle 3" umfasst ein zweikreisiges Motor-Pumpen-Aggregat 30. Bezüglich des Bremskreises I ist die zweite Druckquelle 3" wie im zweiten Ausführungsbeispiel ausgeführt (geschlossenes ABS mit Niederdruckspeicher 33a).

Bezüglich des Bremskreises II handelt es sich um ein offenes ABS, d.h. es ist kein Niederdruckspeicher 33b vorgesehen. Die Auslassventile 61c und 61d sind über Rücklaufleitung 66 mit Druckmittelvorratsbehälter 70 verbunden. Entsprechend ist der Sauganschluss der Pumpe 38b mit der Rücklaufleitung 66, und damit dem Druckmittelvorratsbehälter 70, verbunden, so dass von der Pumpe 38b Druckmittel aus dem Druckmittelvorratsbehälter 70 angesaugt wird.

Beispielsgemäß sind für Bremskreis II in Druckquelle 3" zwei elektrisch betätigbare, stromlos offene Ventile 43 und 44 sowie ein Drucksensor 36b vorgesehen.

In der Verbindung 26b zwischen dem Druckraum 23 des Hauptbremszylinders 7 und der Druckmodulationseinrichtung 6 ist das stromlos offen ausgeführte Ventil 44 angeordnet, mittels welchem die hydraulische Verbindung zwischen dem Hauptbremszylinderdruckraum 23 und der Druckmodulationseinrichtung 6 unterbrochen werden kann.

Pumpe 38b ist das stromlos offen ausgeführte, vorteilhafterweise analog ansteuerbare, Ventil 43 parallel geschaltet. Ventil 43 ist ein zu der Druckmodulationseinrichtung 6 hin öffnendes, nicht näher bezeichnetes Rückschlagventil parallel geschaltet.

Der Druck hinter dem Ventil 43, d.h. der Modulatorvordruck des Bremskreises II, wird mittels des Drucksensors 36b gemessen.

Durch die erfindungsgemäße Bremsanlage wird die Verfügbarkeit schlupfgeregelter und fahrzeugstabilisierender Bremsungen erhöht, insbesondere auch deshalb, weil die Verfügbarkeit des vollständigen Funktionsumfangs bekannter Bremssysteme primär durch Fehler in der elektrischen Energieversorgung und in der elektronischen Steuer-und Regeleinheit gefährdet ist. Dagegen sind Fehler in der Hydraulik eher selten.

Bevorzugt wird daher vorgeschlagen, das bewährte Hydrauliklayout eines an sich bekannten "ESC-Bremssystems" zu übernehmen (siehe Fig. 1), jedoch die Energieversorgung und die Elektronikkonfiguration zu ändern.

Die Bremsanlage wird bevorzugt aus zwei voneinander unabhängigen elektrischen Energieversorgungseinheiten 4, 5 gespeist und umfasst drei elektronische Steuer- und Regeleinheiten 12, 13, 16.

Die erste Steuer- und Regeleinheit 12 ist bevorzugt an die erste elektrische Energieversorgungseinheit 4 angeschlossen und kontrolliert die erste Druckquelle 2, insbesondere den Bremskraftverstärker 8.

Die zweite Steuer- und Regeleinheit 13 ist bevorzugt an die zweite elektrische Energieversorgungseinheit 5 angeschlossen und kontrolliert die zweite Druckquelle 3, 3', 3", insbesondere die Kreisdruckbereitstellung der ESC-Hydraulik (Modulatorvordrücke), durch Ansteuerung von Pumpen 38a, 38b und Ventilen 31a, 32a, 31b, 32b bzw. 31a, 32a, 43, 44.

Die dritte Steuer- und Regeleinheit 16 ist bevorzugt an die erste und die zweite elektrische Energieversorgungseinheit 4, 5 angeschlossen und kontrolliert die Radbremsdruckmodulation durch Ansteuern der Radbremsdruckmodulationsventile 60a-60d, 61a-61d.

Zum Anschluss der dritten Steuer- und Regeleinheit 16 an die beiden elektrischen Energieversorgungseinheiten 4, 5 ist bevorzugt eine elektronische Einrichtung 45 vorgesehen, die so aufgebaut ist, dass ein Fehler in der einen Energieversorgungseinheit nicht einen durch diese Einrichtung 45 mit verursachten Ausfall der anderen Energieversorgungseinheit zur Folge haben kann.

Beispielsweise besteht diese elektronische Einrichtung 45 aus einem DC-DC-Wandler-Modul mit zwei Eingängen und einem Ausgang.

Dies hat auch den Vorteil, dass zusätzlich in einem gewissen Umfang Unter- und Überspannungen kompensiert werden können. Günstig hierfür ist es, dass an die dritte Steuer- und Regeleinheit 16 kein Hochstromverbraucher, wie eine elektrisch angetriebene Pumpe oder ein Bremskraftverstärker, angeschlossen ist, sondern lediglich acht Ventile 60a-60d, 61a-61d mit einem relativ geringen Strombedarf.

Die dritte Steuer- und Regeleinheit 16 ist für alle bremssystemspezifischen Regelaufgaben zuständig, die über eine zentrale Druckstellung hinausgehen - z.B. die Blockierverhinderung und die Fahrzeugstabilisierung. Dementsprechend sind bevorzugt die dafür benötigten Sensoren, wie z.B. Raddrehzahlsensoren 13, Inertialsensorik 14 und Lenkwinkel, an die dritte Steuer- und Regeleinheit 16 angeschlossen.

Die erste Steuer- und Regeleinheit 12 ist bevorzugt Bestandteil des Bremsen-Subsystems "erste Druckquelle" 2, insbesondere des Bremskraftverstärkers 8. Steuer- und Regeleinheit 12 ist zweckmäßigerweise in der Nähe der Bremskraftverstärker-Aktuatorik angeordnet und kontrolliert die Bremskraftverstärkung bzw. die Druckbereitstellung mittels des Bremskraftverstärkers.

Die erste Steuer- und Regeleinheit 12 ist bevorzugt mit der zweiten Steuer- und Regeleinheit 13 und der dritten Steuer- und Regeleinheit 16 über einen Datenbus (beispielsgemäß Datenbusse 29, 62) verbunden und kann so z.B. von der dritten Steuer- und Regeleinheit 16 aufgefordert werden, aktiv einen Bremsdruck aufzubauen.

Die zweite Steuer- und Regeleinheit 13 kontrolliert die zweite Druckquelle 3, 3', 3", insbesondere den Pumpenmotor 37 und die Ventile 31a, 32a, 31b, 32b bzw. 31a, 32a, 43, 44 (z.B. die Ventile 31a, 32a, 31b, 32b, die Teil der ESC- Hydraulikeinheit sind). Daher ist die zweite Steuer- und Regeleinheit 13 zweckmäßigerweise baulich mit der zweiten Druckquelle verbunden.

Die zweite Steuer- und Regeleinheit 13 ist bevorzugt mit der ersten Steuer- und Regeleinheit 12 und der dritten Steuer- und Regeleinheit 16 über einen Datenbus (29, 62) verbunden und kann so z.B. von der dritten Steuer- und Regeleinheit aufgefordert werden, aktiv einen Bremsdruck aufzubauen. Außerdem ist es möglich, dass die erste Steuer- und Regeleinheit 12 die zweite Steuer- und Regeleinheit 13 auffordert, Modulatorvordrücke aufzubauen.

Gemäß einer bevorzugten Ausführungsform der Erfindung wird die Ansteuerung der Elektromagnetventile 31a, 32a, 31b, 32b bzw. 31a, 32a, 43, 44 der zweiten Druckquelle 3, 3', 3" ebenfalls von der dritten Steuer- und Regeleinheit 16 vorgenommen. In diesem Falle reduzieren sich die Aufgaben der zweiten Steuer- und Regeleinheit 13 auf die Kontrolle des elektrischen Pumpenmotors 37. Allerdings ist der Funktionsumfang eines solchen Systems beim Auftreten potenzieller Fehler geringer als in der anderen bevorzugten Ausführungsform, bei welcher die Ansteuerung der Elektromagnetventile 31a, 32a, 31b, 32b bzw. 31a, 32a, 43, 44 der zweiten Druckquelle 3, 3', 3" von der zweiten Steuer- und Regeleinheit 13 vorgenommen wird.

In der Bremsanlage hat die Funktion der dritten Steuer- und Regeleinheit 16 entscheidenden Einfluss auf die Verfügbarkeit der Bremssystem-Regelfunktionen. Im Falle einer Selbstabschaltung der dritten Steuer- und Regeleinheit 16 aufgrund eines internen Fehlers oder eines Ausfalls ihrer doppelt gespeisten Stromversorgung fallen diese Regelfunktionen aus. In diesem Fall kann sowohl der Fahrer als auch die Autopilot-Funktion das Fahrzeug noch über ein redundantes Elektroniksystem abbremsen - nur eben ohne radindividuelle Regeleingriffe. Der Fahrer erhält dabei eine Bremskraftunterstützung - entweder durch die erste Druckquelle 2 (z.B. den regulären Bremskraftverstärker) oder über die von der zweiten Steuer- und Regeleinheit 13 kontrollierte zweite Druckquelle 3, 3', 3" (d.h. die Pumpen-Ventil-Hydraulik) .

Die beispielsgemäßen Bremsanlagen sind in hervorragender Weise zum Einsatz in autonom fahrenden Fahrzeugen geeignet. Zum einen besitzt die Bremsanlage die höhere Verfügbarkeit der Grundbremsfunktion, der Schlupfregelung und der Fahrzeugstabilisierung und zum anderen ist es möglich, den Datenpfad vom Autopilot-Rechner zur Bremsanlage ausfallsicher zu gestalten.

Dadurch, dass in den Bremsanlagen zumindest drei Steuer- und Regeleinheiten 12, 13, 16 vorhanden sind, können die Daten redundant ausgetauscht werden. Es ist sogar die besonders sichere Dreifachredundanz möglich, indem jede der drei Steuer- und Regeleinheiten mit einer von den anderen unabhängigen Datenbusverbindung von dem Rechnerverbund der Autopilot-Funktion Daten erhält.

Wenn die erste Energieversorgungseinheit 4 (oder die erste Steuer- und Regeleinheiten 12) ausfällt, betrifft dies die erste Druckquelle 2, z.B. den Bremskraftverstärker 8. Seine Funktion wird durch eine Modulatorvordruck-Bereitstellung mittels der von der zweiten Energieversorgungseinheit 5 versorgten (und von der zweiten Steuer- und Regeleinheiten 13 kontrollierten) zweiten Druckquelle 3, 3', 3" ersetzt. Die Bremsanlage besitzt dann Vollfunktion.

Wenn die zweite Energieversorgungseinheit 5 (oder die zweite Steuer- und Regeleinheiten 13) ausfällt, betrifft dies die zweite Druckquelle 3, 3', 3", insbesondere den Druckaufbau mittels Pumpe 38a, 38b und die Rückförderung, d.h. das Leerpumpen des oder der Niederdruckspeicher 33a, 33b. In diesem Falle wird der Druckaufbau durch die von der ersten Energieversorgungseinheit 4 versorgte (und von der ersten Steuer- und Regeleinheiten 12 kontrollierten) erste Druckquelle 2, z.B. den Bremskraftverstärker 8, wahrgenommen und die Bremsanlage besitzt Vollfunktion, solange der/die Niederdruckspeicher nicht vollständig gefüllt sind.

Wenn die dritte Steuer- und Regeleinheiten 16 ausfällt, ist sowohl die Bremskraftverstärkungsfunktion als auch die "brake-by-wire"-Funktion immer noch redundant vorhanden. Daher kann der Fahrer auch in diesem Fall noch sicher verstärkt bremsen und auch der Autopilot (die Autopilot-Funktion) kann das Fahrzeug "by-wire" verzögern. Es könnte sogar zusätzlich noch eine der beiden Energieversorgungseinheiten 4, 5 ausfallen, ohne dass diese Bremsfunktion verloren geht.

Es wird bevorzugt eine Bremsanlage mit elektrisch steuerbarem Bremskraftverstärker mit nachgeschaltetem ESC-Hydraulikmodul vorgeschlagen. Das bekannte Hydrauliklayout wird nicht geändert, jedoch wird die bekannte ESC-Steuer- und Regeleinheit durch zwei Steuer- und Regeleinheiten 13, 16 ersetzt, die entsprechend weniger Komponenten anzusteuern haben. Diese Änderungen haben eine große Erhöhung der Verfügbarkeit der Bremssystemfunktionen zur Folge.

Soll ein Fahrzeug bereitgestellt werden, das sowohl ohne als auch mit automatisierten Fahrfunktionen ausgeliefert werden soll, so können einfach alle Fahrzeuge mit einer erfindungsgemäßen Bremsanlage ausgestattet werden. Der Mehraufwand für herkömmliche Fahrzeuge ist gering und gleichzeitig kann bei Bedarf eine Bremsanlage mit hoher Funktionssicherheit für das automatisierte Fahren bereitgestellt werden.

## Patentansprüche

1. Bremsanlage für ein Kraftfahrzeug zur Betätigung von hydraulisch betätigbaren Radbremsen (1), mit
• einer ersten elektrisch steuerbaren Druckquelle (2) zur Bereitstellung eines Bremsdrucks zur Betätigung der Radbremsen,
• einer elektrisch steuerbaren Druckmodulationseinrichtung (6) zum Einstellen radindividueller Bremsdrücke für die Radbremsen (1) mit einem elektrisch betätigbaren Einlassventil (60a-60d) und einem elektrisch betätigbaren Auslassventil (61a-61d) für jede Radbremse (1), und
• einer zweiten elektrisch steuerbaren Druckquelle (3, 3', 3") zur Bereitstellung eines Bremsdrucks zur Betätigung der Radbremsen umfassend ein Motor-Pumpen-Aggregat (30) mit einer zumindest zweikreisigen hydraulischen Pumpe (38a, 38b) und zumindest einem Niederdruckspeicher (33a, 33b), wobei der Niederdruckspeicher (33a) mit einem Ausgangsanschluss zumindest eines Auslassventils (61a, 61b) verbunden ist,
**gekennzeichnet durch** eine erste elektrische Energieversorgungseinheit (4) und eine zweite elektrische Energieversorgungseinheit (5), welche von der ersten elektrischen Energieversorgungseinheit unabhängig ist, wobei die erste Druckquelle (2) von der ersten Energieversorgungseinheit (4) mit elektrischer Energie versorgt wird, die zweite Druckquelle (3, 3', 3") von der zweiten Energieversorgungseinheit (5) mit elektrischer Energie versorgt wird und die Druckmodulationseinrichtung (6) von der ersten Energieversorgungseinheit (4) und der zweiten Energieversorgungseinheit (5) mit elektrischer Energie versorgt werden kann.

2. Bremsanlage nach Anspruch 1, **dadurch gekennzeichnet, dass** eine der ersten Druckquelle zugeordnete erste elektronische Steuer- und Regeleinheit (12) zur Ansteuerung der ersten Druckquelle (2), eine der zweiten Druckquelle zugeordnete zweite elektronische Steuer- und Regeleinheit (13) zur Ansteuerung der zweiten Druckquelle (3, 3', 3'') und eine der Druckmodulationseinrichtung zugeordnete dritte elektronische Steuer- und Regeleinheit (16) zur Ansteuerung der Druckmodulationseinrichtung (6) vorgesehen sind.

3. Bremsanlage nach Anspruch 2, **dadurch gekennzeichnet, dass** die erste elektronische Steuer- und Regeleinheit (12) von der ersten Energieversorgungseinheit (4) mit elektrischer Energie versorgt wird, die zweite elektronische Steuer- und Regeleinheit (13) von der zweiten Energieversorgungseinheit (5) mit elektrischer Energie versorgt wird und die dritte elektronische Steuer- und Regeleinheit (16) von der ersten Energieversorgungseinheit (4) und von der zweiten Energieversorgungseinheit (5) mit elektrischer Energie versorgt werden kann.

4. Bremsanlage nach Anspruch 3, **dadurch gekennzeichnet, dass** eine elektronische Einrichtung (45) zum Anschluss der dritten elektronischen Steuer- und Regeleinheit (16) an die erste und die zweite Energieversorgungseinheit (4, 5) vorgesehen ist, welche derart ausgeführt ist, dass ein Fehler in einer der Energieversorgungseinheiten nicht zu einem Ausfall der Energieversorgung der dritten elektronischen Steuer- und Regeleinheit (16) führt.

5. Bremsanlage nach einem der Ansprüche 2 bis 4, **dadurch gekennzeichnet, dass** die erste, die zweite und die dritte elektronische Steuer- und Regeleinheit über zumindest einen Datenbus (29, 62) miteinander verbunden sind.

6. Bremsanlage nach einem der Ansprüche 2 bis 5, **dadurch gekennzeichnet, dass** die Bremsanlage Raddrehzahlsensoren (13) umfasst oder mit solchen verbunden ist, wobei die Signale der Raddrehzahlsensoren (13) der dritten elektronischen Steuer- und Regeleinheit (16) zugeführt werden, und insbesondere dass die Bremsanlage eine Sensoreinrichtung (14) zur Erfassung von Fahrdynamikgrößen umfasst oder mit einer solchen verbunden ist, wobei die Signale der Sensoreinrichtung der dritten elektronischen Steuer- und Regeleinheit (16) zugeführt werden.

7. Bremsanlage nach einem der Ansprüche 1 bis 6, **dadurch gekennzeichnet, dass** die zweite Druckquelle (3, 3', 3") elektrisch betätigbare Ventile (31a, 31b, 32a, 32b, 43, 44) umfasst.

8. Bremsanlage nach Anspruch 7, **dadurch gekennzeichnet, dass** die Ventile (31a, 31b, 32a, 32b, 43, 44) der zweiten Druckquelle sowie das Motor-Pumpen-Aggregat (30) der zweiten Druckquelle von der zweiten elektronischen Steuer- und Regeleinheit (13) angesteuert werden.

9. Bremsanlage nach Anspruch 7, **dadurch gekennzeichnet, dass** die Ventile (31a, 31b, 32a, 32b, 44) der zweiten Druckquelle von der dritten elektronischen Steuer- und Regeleinheit (16) angesteuert werden, während das Motor-Pumpen-Aggregat (30) der zweiten Druckquelle von der zweiten elektronischen Steuer- und Regeleinheit (13) angesteuert wird.

10. Bremsanlage nach einem der Ansprüche 1 bis 9, **dadurch gekennzeichnet, dass** die erste elektrisch steuerbare Druckquelle (2) einen Hauptbremszylinder (7) mit einem, insbesondere diesem vorgeschalteten, sowohl über ein Bremspedal mechanisch als auch elektrisch steuerbaren Bremskraftverstärker (8) umfasst, wobei der Hauptbremszylinder zwei Druckräume (21, 22) aufweist und jedem der Druckräume ein Bremskreis (I, II) mit Radbremsen zugeordnet ist.

11. Bremsanlage nach Anspruch 10, **dadurch gekennzeichnet, dass** je Bremskreis (I, II) ein Sauganschluss der Pumpe (38a, 38b), insbesondere über ein stromlos geschlossenes Ventil (31a, 31b), mit dem zugeordneten Druckraum (21, 23) des Hauptbremszylinders (7) trennbar verbunden ist und ein Druckanschluss der Pumpe (38a, 38b) mit den Einlassventilen (60a, 60b; 60c, 60d) der Radbremsen des Bremskreises, insbesondere direkt, verbunden ist.

12. Bremsanlage nach Anspruch 10 oder 11, **dadurch gekennzeichnet, dass** der bremspedal- oder elektrisch steuerbare Bremskraftverstärker (8) einen elektrisch steuerbaren elektromechanischen Aktuator, insbesondere mit einem Elektromotor und einem Translations-Rotations-Getriebe, umfasst, welcher einen Kolben (9) des Hauptbremszylinders (7) betätigt.

13. Bremsanlage nach einem der Ansprüche 10 bis 12, **dadurch gekennzeichnet, dass** die zweite Druckquelle (3, 3') je Bremskreis (I, II) ein erstes, stromlos offenes Ventil (32a, 32b), ein zweites, stromlos geschlossenes Ventil (31a, 31b) und einen Niederdruckspeicher (33a, 33b) umfasst, wobei die Auslassventile der Radbremsen des Bremskreises mit dem Niederdruckspeicher verbunden sind.

14. Bremsanlage nach einem der Ansprüche 10 bis 12, **dadurch gekennzeichnet, dass** die zweite Druckquelle (3") für nur einen der Bremskreise (I) ein erstes, stromlos offenes Ventil (32a), ein zweites, stromlos geschlossenes Ventil (31a) und den Niederdruckspeicher (33a, 33b) umfasst, wobei die Auslassventile (61a, 61b) der Radbremsen dieses Bremskreises (I) mit dem Niederdruckspeicher (33a) verbunden sind und die Auslassventile (61c, 61d) der Radbremsen des anderen Bremskreises (II) mit einem unter Atmosphärendruck stehenden, insbesondere der ersten Druckquelle (2) zugeordneten, Druckmittelvorratsbehälter (70) verbunden sind.

## Claims

1. Brake system for a motor vehicle for operating wheel brakes (1) that can be operated hydraulically, with
• a first electrically controllable pressure source (2) for supplying a brake pressure for operating the wheel brakes,
• an electrically controllable pressure modulation device (6) for setting wheel-specific brake pressures for the wheel brakes (1) with an inlet valve (60a-60d) that can be operated electrically and an outlet valve (61a-61d) that can be operated electrically for each wheel brake (1), and
• a second electrically controllable pressure source (3, 3', 3") for supplying a brake pressure for operating the wheel brakes comprising a motor-pump assembly (30) with an at least dual circuit hydraulic pump (38a, 38b) and at least one low-pressure reservoir (33a, 33b), whereby the low-pressure reservoir (33a) is connected to an output port of at least one outlet valve (61a, 61b),
**characterized by** a first electrical power supply unit (4) and a second electrical power supply unit (5) that is independent of the first electrical power supply unit, whereby the first pressure source (2) is supplied with electrical energy by the first power supply unit (4), the second pressure source (3, 3', 3") is supplied with electrical energy by the second power supply unit (5) and the pressure modulation device (6) can be supplied with electrical energy by the first power supply unit (4) and the second power supply unit (5).

2. Brake system according to Claim 1, **characterized in that** a first electronic control and regulating unit (12) associated with the first pressure source for actuating the first pressure source (2), a second electronic control and regulating unit (13) associated with the second pressure source for actuating the second pressure source (3, 3', 3") and a third electronic control and regulating unit (16) associated with the pressure modulation device for actuating the pressure modulation device (6) are provided.

3. Brake system according to Claim 2, **characterized in that** the first electronic control and regulating unit (12) is supplied with electrical energy by the first power supply unit (4), the second electronic control and regulating unit (13) is supplied with electrical energy by the second power supply unit (5) and the third electronic control and regulating unit (16) can be supplied with electrical energy by the first power supply unit (4) and by the second power supply unit (5) .

4. Brake system according to Claim 3, **characterized in that** an electronic device (45) for connecting the third electronic control and regulating unit (16) to the first and the second power supply units (4, 5) is provided, which is implemented such that a fault in one of the power supply units does result in a failure of the power supply of the third electronic control and regulating unit (16).

5. Brake system according to any one of Claims 2 to 4, **characterized in that** the first, the second and the third electronic control and regulating units are connected to each other by means of at least one data bus (29, 62).

6. Brake system according to any one of Claims 2 to 5, **characterized in that** the brake system comprises or is connected to wheel revolution rate sensors (13), whereby the signals of the wheel revolution rate sensors (13) are delivered to the third electronic control and regulating unit (16), and in particular that the brake system comprises or is connected to a sensor device (14) for detecting driving dynamics variables, whereby the signals of the sensor device are delivered to the third electronic control and regulating unit (16).

7. Brake system according to any one of Claims 1 to 6, **characterized in that** the second pressure source (3, 3', 3") comprises valves (31a, 31b, 32a, 32b, 43, 44) that can be operated electrically.

8. Brake system according to Claim 7, **characterized in that** the valves (31a, 31b, 32a, 32b, 43, 44) of the second pressure source as well as the motor-pump assembly (30) of the second pressure source are actuated by the second electronic control and regulating unit (13).

9. Brake system according to Claim 7, **characterized in that** the valves (31a, 31b, 32a, 32b, 44) of the second pressure source are actuated by the third electronic control and regulating unit (16), whereas the motor-pump assembly (30) the second pressure source is actuated by the second electronic control and regulating unit (13).

10. Brake system according to any one of Claims 1 to 9, **characterized in that** the first electrically controllable pressure source (2) comprises a master brake cylinder (7) with a braking force booster (8) that is in particular connected upstream thereof and that can be controlled both mechanically by means of a brake pedal and also electrically, whereby the master brake cylinder comprises two pressure chambers (21, 22) and a brake circuit (I, II) with wheel brakes is associated with each of the pressure chambers.

11. Brake system according to Claim 10, **characterized in that** for each brake circuit (I, II) a suction port of the pump (38a, 38b) is reversibly connected to the associated pressure chamber (21, 23) of the master brake cylinder (7), in particular by means of a normally closed valve (31a, 31b), and a pressure port of the pump (38a, 38b) is connected, in particular directly, to the inlet valves (60a, 60b; 60c, 60d) of the wheel brakes of the brake circuit.

12. Brake system according to Claim 10 or 11, **characterized in that** the brake pedal-controllable or electrically controllable braking force booster (8) comprises an electrically controllable electromechanical actuator, in particular with an electric motor and a translation-rotation gearbox, that operates a piston (9) of the master brake cylinder (7).

13. Brake system according to any one of Claims 10 to 12, **characterized in that** the second pressure source (3, 3') comprises a first normally open valve (32a, 32b), a second normally closed valve (31a, 31b) and a low-pressure reservoir (33a, 33b) for each brake circuit (I, II), whereby the outlet valves of the wheel brakes of the brake circuit are connected to the low-pressure reservoir.

14. Brake system according to any one of Claims 10 to 12, **characterized in that** for only one of the brake circuits (I) the second pressure source (3") comprises a first normally open valve (32a), a second normally closed valve (31a) and the low-pressure reservoir (33a, 33b), whereby the outlet valves (61a, 61b) of the wheel brakes of said brake circuit (I) are connected to the low-pressure reservoir (33a), and the outlet valves (61c, 61d) of the wheel brakes of the other brake circuit (II) are connected to a pressure medium reservoir container (70) that is at atmospheric pressure and that in particular is associated with the first pressure source (2).

## Revendications

1. Système de freinage pour un véhicule automobile destiné à actionner des freins de roue (1) pouvant être actionnés hydrauliquement, comprenant
* une première source de pression (2) à commande électrique destinée à fournir une pression de freinage servant à l'actionnement des freins de roue,
* un dispositif de modulation de pression (6) à commande électrique destiné à régler des pressions de freinage individuelles de roue pour les freins de roue (1) avec une vanne d'entrée (60a-60d) pouvant être actionnée électriquement et une vanne de sortie (61a-61d) pouvant être actionnée électriquement pour chaque frein de roue (1), et
* une deuxième source de pression (3, 3', 3") à commande électrique destinée à fournir une pression de freinage servant à l'actionnement des freins de roue, comportant un groupe moteur-pompe (30) comprenant une pompe hydraulique (38a, 38b) au moins à deux circuits et au moins un accumulateur à basse pression (33a, 33b), l'accumulateur à basse pression (33a) étant relié à un raccord de sortie d'au moins une vanne de sortie (61a-61b),
**caractérisé par** une première unité d'alimentation en énergie électrique (4) et une deuxième unité d'alimentation en énergie électrique (5), qui est indépendante de la première unité d'alimentation en énergie électrique, la première source de pression (2) étant alimentée en énergie électrique par la première unité d'alimentation en énergie électrique (4), la deuxième source de pression (3, 3', 3'') étant alimentée en énergie électrique par la deuxième unité d'alimentation en énergie électrique (5) et le dispositif de modulation de pression (6) pouvant être alimenté en énergie électrique par la première unité d'alimentation en énergie (4) et par la deuxième unité d'alimentation en énergie (5).

2. Système de freinage selon la revendication 1, **caractérisé en ce qu'**il existe une première unité de commande et de régulation électronique (12) associée à la première source de pression et servant à commander la première source de pression (2), une deuxième unité de commande et de régulation électronique (13) associée à la deuxième source de pression et servant à commander la deuxième source de pression (3, 3', 3") et une troisième unité de commande et de régulation électronique (16) associée au dispositif de modulation de pression et servant à commander le dispositif de modulation de pression (6).

3. Système de freinage selon la revendication 2, **caractérisé en ce que** la première unité de commande et de régulation électronique (12) est alimentée en énergie électrique par la première unité d'alimentation en énergie (4), la deuxième unité de commande et de régulation électronique (13) est alimentée en énergie électrique par la deuxième unité d'alimentation en énergie (5) et la troisième unité de commande et de régulation électronique (16) peut être alimentée en énergie électrique par la première unité d'alimentation en énergie (4) et par la deuxième unité d'alimentation en énergie (5).

4. Système de freinage selon la revendication 3, **caractérisé en ce qu'**il existe un dispositif électronique (45) destiné au raccordement de la troisième unité de commande et de régulation électronique (16) aux première et deuxième unités d'alimentation en énergie (4, 5), lequel est réalisé de telle sorte qu'une erreur dans l'une des unités d'alimentation en énergie ne provoque pas une panne de l'alimentation en énergie de la troisième unité de commande et de régulation électronique (16).

5. Système de freinage selon l'une des revendications 2 à 4, **caractérisé en ce que** les première, deuxième et troisième unités de commande et de régulation électroniques sont reliées entre elles par le biais d'au moins un bus de données (29, 62).

6. Système de freinage selon l'une des revendications 2 à 5, **caractérisé en ce que** le système de freinage comporte des capteurs de vitesse de rotation de roue (13) ou est relié à de tels capteurs, les signaux des capteurs de vitesse de rotation de roue (13) étant acheminés à la troisième unité de commande et de régulation électronique (16), et notamment **en ce que** le système de freinage comporte un dispositif de détection (14) destiné à détecter des grandeurs dynamiques de conduite ou est relié à un tel dispositif, les signaux du dispositif de détection étant acheminés à la troisième unité de commande et de régulation électronique (16).

7. Système de freinage selon l'une des revendications 1 à 6, **caractérisé en ce que** la deuxième source de pression (3, 3', 3") comporte des vannes (31a, 31b, 32a, 32b, 43, 44) pouvant être actionnées électriquement.

8. Système de freinage selon la revendication 7, **caractérisé en ce que** les vannes (31a, 31b, 32a, 32b, 43, 44) de la deuxième source de pression ainsi que le groupe moteur-pompe (30) de la deuxième source de pression sont commandés par la deuxième unité de commande et de régulation électronique (13).

9. Système de freinage selon la revendication 7, **caractérisé en ce que** les vannes (31a, 31b, 32a, 32b, 44) de la deuxième source de pression sont commandées par la troisième unité de commande et de régulation électronique (16), alors que le groupe moteur-pompe (30) de la deuxième source de pression est commandé par la deuxième unité de commande et de régulation électronique (13).

10. Système de freinage selon l'une des revendications 1 à 9, **caractérisé en ce que** la première source de pression (2) à commande électrique comporte un maître-cylindre de frein (7) comprenant un servofrein (8), notamment monté en amont de celui-ci, qui peut être commandée aussi bien mécaniquement par le biais d'une pédale de frein qu'électriquement, le maître-cylindre de frein possédant deux chambres de pression (21, 22) et un circuit de frein (I, II) comprenant des freins de roue étant associé à chacune des chambres de pression.

11. Système de freinage selon la revendication 10, **caractérisé en ce que** pour chaque circuit de frein (I, II), un raccord d'aspiration de la pompe (38a, 38b) est raccordé de manière séparable à la chambre de pression (21, 23) correspondante du maître-cylindre de frein (7), notamment par le biais d'une vanne fermée au repos (31a, 31b), et un raccord de refoulement de la pompe (38a, 38b) est relié aux vannes d'entrée (60a, 60b ; 60c, 60d) des freins de roue du circuit de frein, notamment directement.

12. Système de freinage selon la revendication 10 ou 11, **caractérisé en ce que** le servofrein (8) qui peut être commandé par une pédale de frein ou électriquement comporte un actionneur électromécanique à commande électrique, notamment avec un moteur électrique et un engrenage à translation-rotation qui actionne un piston (9) du maître-cylindre de frein (7).

13. Système de freinage selon l'une des revendications 10 à 12, **caractérisé en ce que** la deuxième source de pression (3, 3'), pour chaque circuit de frein (I, II), comporte une première vanne ouverte au repos (32a, 32b), une deuxième vanne fermée au repos (31a, 31b) et un accumulateur à basse pression (33a, 33b), les vannes de sortie des freins de roue du circuit de frein étant reliées à l'accumulateur à basse pression.

14. Système de freinage selon l'une des revendications 10 à 12, **caractérisé en ce que** la deuxième source de pression (3'') comporte une première vanne ouverte au repos (32a), une deuxième vanne fermée au repos (31a) et l'accumulateur à basse pression (33a, 33b) uniquement pour l'un des circuits de frein (I), les vannes de sortie (61a, 61b) des freins de roue de ce circuit de frein (I) étant reliées à l'accumulateur à basse pression (33a) et les vannes de sortie (61c, 61d) des freins de roue de l'autre circuit de frein (II) étant reliées à un réservoir de fluide sous pression (70) qui se trouve sous pression atmosphérique, notamment associé à la première source de pression (2).
